# EUROPÄISCHE PATENTSCHRIFT

(11) **EP 2 566 374 B1**
(45) Veröffentlichungstag und Bekanntmachung des Hinweises auf die Patenterteilung: **26.11.2014**
(21) Anmeldenummer: 11718977.9
(22) Anmeldetag: 04.05.2011
(51) Int. Cl.: A47J 31/06, A47J 31/36, A47J 31/52

(54) **BRÜH- ODER ZUBEREITUNGSKAMMER FÜR EIN GETRÄNKEZUBEREITUNGSGERÄT**
BREWING OR PREPARATION CHAMBER FOR A BEVERAGE MAKING MACHINE
CHAMBRE D'INFUSION OU DE PRÉPARATION POUR UN APPAREIL DE PRÉPARATION DE BOISSONS

(30) Priorität: 06.05.2010 DE 202010006556 U
(43) Veröffentlichungstag der Anmeldung: 13.03.2013
(73) Patentinhaber: Nestec S.A., 1800 Vevey (CH)
(72) Erfinder: MAHLICH, Gotthard, 61476 Kronberg im Taunus (DE)
(74) Vertreter: Rupp, Christian
(86) Internationale Anmeldenummer: PCT/EP2011/057137
(87) Internationale Veröffentlichungsnummer: WO 2011/138368

(56) Entgegenhaltungen:
- EP-A1- 0 334 572
- EP-A1- 0 449 533
- WO-A2-2008/090122
- WO-A2-2010/092543
- DE-U1-202010 006 556
- US-A- 6 026 732

## Beschreibung

Die Erfindung betrifft eine Brüh- oder Zubereitungskammer eines Getränkezubereitungsgerätes zur Aufnahme und Extraktion einer mit pulverförmigen oder flüssigen Getränkebasisstoffen gefüllten Portionskapsel.

Dem Stand der Technik entsprechende Getränkezubereitungsgeräte und Portionskapseln sind zum Beispiel in EP 0 334 572 A1 und EP 0 449 533 A1 offenbart.

Getränkezubereitungsgeräte, insbesondere Espressomaschinen, sind zunehmend für die Verwendung von Portionskapseln, die mit einer bestimmten Menge von pulverförmigen oder flüssigen Getränkebasisstoffen befüllt sind, ausgelegt. Die gebräuchlichsten Portionskapseln bestehen dabei entweder aus einem aus Aluminiumfolie tiefgezogenem Topf, der mit einem Deckelverschlusselement aus Aluminiumfolie luft- und aromadicht verschlossen ist, oder aus einem aus Kunststofffolie tiefgezogenem Topf oder einem im Kunststoff-Spritzgussverfahren hergestellten Kunststofftopf, der mit einem Deckelverschlusselement aus Aluminium- oder Kunststofffolie luft- und aromadicht verschlossen ist.

Die Getränkezubereitungsgeräte die zur Aufnahme und Extraktion einer derartiger Portionskapsel geeignet sind, sind mit einer Brüh- oder Zubereitungskammer ausgestattet, die bevorzugt aus einem ortsfesten ersten Kammerteil, das mit Öffnungsmitteln zum Getränkeauslauf versehen und mit einer Struktur zum Abfließen des Getränkes fluidleitend verbunden ist und einem gegenüber dem ersten Kammerteil horizontal oder vertikal beweglichen zweiten Kammerteil, das zur Versorgung der Portionskapsel mit der Extraktionsflüssigkeit mit einem die Extraktionsflüssigkeit zuführenden Aggregat fluidleitend verbunden ist und mit wenigstens einem Aufstechmittel zum Öffnen der Portionskapsel und zum Einleiten der Extraktionsflüssigkeit in die Portionskapsel versehen ist, besteht, wobei die Brüh- oder Zubereitungskammer zur Aufnahme einer Portionskapsel geöffnet und zur Extraktion der Portionskapsel geschlossen ist.

Für den Brühvorgang stechen die Aufstechmittel in die Portionskapsel - entweder auf der mit der Folie verschlossenen Seite oder auf ihrer Bodenseite - ein und die mit Druck in die Brühkammer gepumpte Extraktionsflüssigkeit kann durch die von den Aufstechmitteln gestochenen Öffnungen in die Portionskapsel strömen. Zum Ablauf des entstandenen Getränkes wird die Portionskapsel, dem jeweiligen Portionskapselsystem entsprechend auf der der Extraktionsflüssigkeitszuführseite gegenüberliegenden Seite geöffnet. Dies erfolgt bei Portionskapseln, die aus einer Kunststofffolie hergestellt und mit einer Kunststoffverschlussfolie oder Aluminiumfolie verschlossen sind, mittels eines am Boden der Brüh- oder Zubereitungskammer angeordneten Portionskapsel-Öffnungsdornes.

Bei Portionskapseln, die aus einer Aluminiumfolie hergestellt und mit einem Deckelverschlusselement aus Aluminiumfolie verschlossen sind, liegt die Aluminiumverschlussfolie auf den Spitzen einer am Boden der Brühkammer angeordneten Pyramidenplatte auf, und durch den in der Portionskapsel durch die unter Pumpendruck in die Portionskapsel strömende Extraktionsflüssigkeit aufgebauten Druck wird die Aluminiumverschlussfolie so gegen die Pyramidenspitzen gedrückt, dass die Folie von den Pyramidenspitzen durchstoßen und damit die Portionskapsel geöffnet wird. Die Aluminiumverschlussfolie ist dabei auf einen bestimmten Berstdruck ausgelegt, wodurch vor dem Durchstechen der Pyramidenspitzen durch die Verschlussfolie, insbesondere bei der Zubereitung eines Espresso eine optimale Durchfeuchtung und Druckbeaufschlagung des Kaffeegranulates erreicht wird, was wesentlich für eine optimale Cremabildung, dem Qualitätsmerkmal für einen guten Espresso, ist. Nach dem Öffnen der Portionskapsel fließt der Kaffeesud über Ablaufkanäle aus der Brühkammer ab.

Bei Brüh- oder Zubereitungskammer-Systemen , die für die Verwendung von aus einer Aluminiumfolie bestehenden Portionskapseln, die mit einem Deckelverschlusselement aus Aluminiumfolie verschlossen sind, ausgelegt sind, besteht die Gefahr, dass systemfremde, vollständig oder teilweise aus Kunststoff bestehende Portionskapseln, die der Konfiguration der Original- Portionskapsel entsprechen und deshalb von der Aufnahmevorrichtung der Brüh - oder Zubereitungskammer akzeptiert werden, zum Einsatz kommen. Durch den systembedingten anderen Aufbau der Brüh -oder Zubereitungskammern für aus einer Aluminiumfolie bestehenden Portionskapseln gegenüber Brüh- oder Zubereitungskammern für aus nicht metallischem Material bestehenden Portionskapseln kann es bei Verwendung von vollständig oder teilweise aus Kunststoff bestehenden Portionskapseln zu erheblichen Betriebsstörungen des Getränkezubereitungsgerätes oder zu minderwertigen Zubereitungsergebnissen führen.

Der vorliegenden Erfindung liegt die Aufgabe zugrunde, die Brüh - oder Aufbereitungskammer, die zur Aufnahme einer vollständig oder teilweise aus Aluminium oder einem elektrisch leitenden Material bestehenden Portionskapsel geeignet ist, mit einer Prüf- und Steuervorrichtung auszustatten, die nur Portionskapsel, die vollständig oder teilweise aus Aluminiumfolie oder einem elektrisch leitenden Material bestehen, akzeptiert und einen Zubereitungszyklus bei Einsatz einer systemfremden ganz oder teilweise aus Kunststoff bestehenden Portionskapsel verhindert.

Erfindungsgemäß wird die Aufgabe durch eine Brüh- oder Zubereitungskammer mit den Merkmalen des Anspruchs 1 gelöst.

Hierzu gehört eine Brüh- oder Zubereitungskammer, die aus einem ersten und einem zweiten Kammerteil gebildet wird und zur Aufnahme einer vollständig oder teilweise aus Aluminium oder einem elektrisch leitenden Material bestehenden Portionskapsel geeignet ist, die in ihrem ersten und ihrem zweiten Kammerteil oder nur im ersten Kammerteil oder nur im zweiten Kammerteil mit elektrisch leitenden Kontakten ausgestattet ist, die die Enden eines unterbrochenen Steuerstromkreises für eine Prüf- und Steuervorrichtung sind, und die geeignet sind, die Zugehörigkeit einer Portionskapsel zu der Brüh - oder Zubereitungskammer zu prüfen.

Der Prüfvorgang erfolgt mit den Schritten, dass der elektrische Startimpuls für einen Getränke-Zubereitungszyklus über einen Steuerstromkreis an eine Steuervorrichtung geleitet wird, die nach ihrer Aktivierung den Zubereitungszyklus startet, wobei dieser Steuerstromkreis für die Prüf - und Steuervorrichtung über im ersten Kammerteil oder im zweiten Kammerteil oder in beiden Kammerteilen der Brüh- oder Zubereitungskammer angeordnete, gegenüber der Brüh- oder Zubereitungskammer elektrisch isolierte elektrische Kontakte führt und nur mittels einer in der Brüh- oder Zubereitungskammer liegenden Portionskapsel, die vollständig oder teilweise elektrisch leitend ist, dadurch geschlossen wird, dass die in dem ersten oder zweiten Kammerteil der Brüh- oder Zubereitungskammer angeordneten elektrischen Kontakte, die die Enden des unterbrochenen Steuerstromkreises der Steuervorrichtung sind, bei geschlossener Brüh- oder Zubereitungskammer in elektrisch leitendem Kontakt zu den elektrisch leitenden, miteinander elektrisch leitend verbundenen Zonen der Portionskapsel stehen.

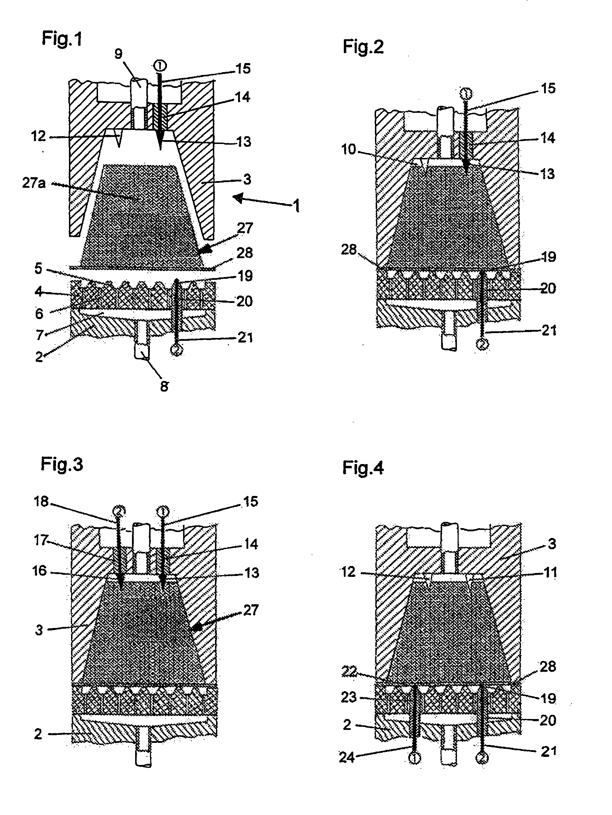

- Fig.1: zeigt schematisch, teilweise geschnitten, eine geöffnete Brüh- oder Zubereitungskammer (1), bestehend aus einem ersten Kammerteil (2) mit einer Pyramidenplatte (4) und einem in dieser angeordneten elektrischen Kontakt (13) und einer Getränkeablaufstruktur (6, 7, 8) einem zweiten Kammerteil (3) mit einer Extraktionsflüssigkeitszufuhr-Anordnung (9), einem ersten Aufstechmittel (12) und einem zweiten als elektrischen Kontakt ausgebildeten Aufstechmittel (13) und einer in der Brüh- oder Zubereitungskammer liegenden vollständig elektrisch leitenden Portionskapsel (27, 27a),
- Fig.2: zeigt schematisch, teilweise geschnitten, die Brüh- oder Zubereitungskammer von Fig.1 in geschlossenem Zustand mit einer in der Brüh - oder Zubereitungskammer liegenden vollständig elektrisch leitenden Portionskapsel,
- Fig.3: zeigt schematisch, teilweise geschnitten, eine geschlossene Brüh- oder Zubereitungskammer, bestehend aus einem ersten Kammerteil mit einer Pyramidenplatte mit einer Getränkeablaufstruktur, einem zweiten Kammerteil mit einer Extraktionsflüssigkeitszufuhr-Anordnung mit zwei als elektrische Kontakte ausgebildeten Aufstechmitteln (16, 13) und einer in der Brüh- oder Zubereitungskammer liegenden elektrisch leitenden Portionskapsel (27),
- Fig.4: zeigt schematisch, teilweise geschnitten, eine geschlossene Brüh- oder Zubereitungskammer, bestehend aus einem ersten Kammerteil mit einer Pyramidenplatte mit zwei in dieser angeordneten elektrischen Kontakten (19, 22) und einer Getränkeablaufstruktur, einem zweiten Kammerteil mit einer Extraktionsflüssigkeitszufuhr-Anordnung und zwei Aufstechmitteln (11, 12) und einer in der Brüh- oder Zubereitungskammer liegenden elektrisch leitenden Portionskapsel (27),

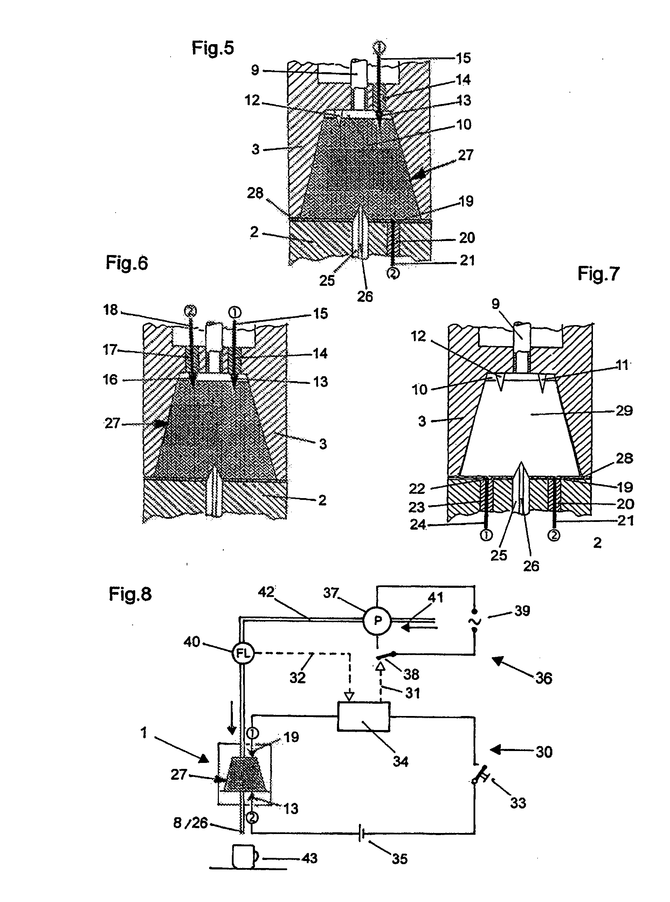

- Fig.5: zeigt schematisch, teilweise geschnitten, eine geschlossene Brüh- oder Zubereitungskammer, bestehend aus einem ersten Kammerteil mit einem Portionskapsel-Öffnungsdorn (25) mit einer Getränkeablaufnut (26), einem elektrischen Kontakt (19), und einem zweiten Kammerteil mit einer Extraktionsflüssigkeitszufuhr-Anordnung mit einem ersten Aufstechmittel (11) und einem zweiten als elektrischen Kontakt ausgebildeten zweiten Aufstechmittel (13), und einer in der Brüh- oder Zubereitungskammer liegenden elektrisch leitenden Portionskapsel,
- Fig.6: zeigt schematisch, teilweise geschnitten, eine geschlossene Brüh- oder Zubereitungskammer, bestehend aus einem ersten Kammerteil mit einem Portionskapsel-Öffnungsdorn mit einer Getränkeablaufnut, einem zweiten Kammerteil mit einer Extraktionsflüssigkeitszufuhr-Anordnung und zwei als elektrische Kontakte ausgebildeten Aufstechmitteln (13, 16) und einer in der Brüh- oder Zubereitungskammer liegenden elektrisch leitenden Portionskapsel (27),
- Fig.7: zeigt schematisch, teilweise geschnitten, eine geschlossene Brüh- oder Zubereitungskammer, bestehend aus einem ersten Kammerteil mit zwei elektrischen Kontakten (19, 22) und einem Portionskapsel-Öffnungsdorn mit einer Getränkeablaufnut, einem zweiten Kammerteil mit einer Extraktionsflüssigkeitszufuhr-Anordnung und zwei Aufstechmitteln (11, 12) und einer in der Brüh- oder Zubereitungskammer liegenden elektrisch nicht leitenden Portionskapsel (29) mit einem elektrisch leitenden Deckelverschlusselement (28),
- Fig.8: zeigt schematisch die elektrische Schaltungsanordnung (30, 36) der Prüf- und Steuervorrichtung.

In einer ersten Konfiguration, der der erste Kammerteil (2) mit einer Pyramidenplatte (4) ausgestattet ist, ist wenigstens ein im beweglichen zweiten Kammerteil (3) der Brüh- oder Zubereitungskammer (1) angeordnetes Aufstechmittel (13) angeordnet, das als elektrisch leitender Kontakt ausgebildet und ein Ende des unterbrochenen Steuerstromkreises (30) für die Steuervorrichtung (34) ist und gegen den zweiten Kammerteil (3) elektrisch isoliert ist, und in der im ersten ortsfesten Kammerteil (2) der Brüh- oder Zubereitungskammer (1) angeordneten Pyramidenplatte (4) mit Pyramidenspitzen (5) die dem Öffnen der Portionskapsel (27) dienen, ist wenigstens ein elektrisch gegen die Pyramidenplatte (4) isolierter elektrisch leitender Kontakt (19) angeordnet, der ebenfalls ein Ende des unterbrochenen Steuerstromkreises (30) für die Prüf- und -Steuervorrichtung (34) ist. Die in der Brüh- oder Zubereitungskammer (1) liegende Portionskapsel (27) liegt mit ihrem elektrisch leitenden Deckelverschlusselementes (28) auf dem elektrischen Kontakt (19) der Pyramidenplatte (4) auf und der Steuerstromkreis (30) für die Prüf- und Steuervorrichtung wird geschlossen, sobald das Aufstechmittel (13) des zweiten Kammerteils (3) beim Schließen der Brüh -oder Zubereitungskammer (1) in die Portionskapsel (27) einsticht und damit mittels der elektrisch leitenden Portionskapsel (27) die Verbindung zwischen dem als elektrischen Kontakt ausgebildeten Aufstechmittel (13) des zweiten Kammerteils (3) und dem Kontakt (19) der Pyramidenplatte (4) des ersten Kammerteils (3) hergestellt ist.

In einer zweiten Konfiguration sind im beweglichen zweiten Kammerteil wenigstens zwei von einander und gegen den zweiten Kammerteil (3) elektrisch isolierte, elektrisch leitende Aufstechmittel (18, 15) angeordnet, die beide jeweils ein Ende des unterbrochenen Steuerstromkreises (30) sind und die, sobald sie beim Schließen der Brüh- oder Zubereitungskammer in die elektrisch leitende Portionskapsel (27) einstechen, mittels der elektrisch leitenden Portionskapsel (27) den Steuerstromkreis (30) für die Prüf- und Steuervorrichtung (34) schließen.

In einer dritten Konfiguration sind in der Pyramidenplatte (4) des ersten Kammerteils (2) wenigstens zwei von einander und gegen die Pyramidenplatte (4) elektrisch isolierte Kontakte (19, 22), die jeweils ein Ende des unterbrochenen Steuerstromkreises (30) sind, angeordnet, auf denen bei geschlossener Brüh- oder Zubereitungskammer (1) das elektrisch leitende Deckelverschlusselement (28) der Portionskapsel (27) aufliegt und den Steuerstromkreis (30) schließt.

In allen drei Konfiguration kann zum Öffnen der Portionseinheit (27, 29) an Stelle einer Pyramidenplatte im ersten Kammerteil (2) der Brüh- oder Zubereitungskammer (1) ein Portionskapsel-Öffnungsdorn (25) mit einer Getränkeablaufnut (26) angeordnet sein.

Zur Getränkezubereitung wird eine Portionskapsel (27, 29) in die geöffnete Brüh- oder Zubereitungskammer (1) eingebracht und die Brüh- oder Zubereitungskammer geschlossen. Während des Schließvorganges stechen die Aufstechmittel (11, 12, 13, 16) des zweiten Kammerteils (3) der Brüh- oder Zubereitungskammer (1) in die Portionskapsel (27, 29) ein, und das elektrisch leitende Deckelverschlusselement (28) der Portionskapsel (27, 29) liegt auf den elektrischen Kontakten (1) des ersten Kammerteils (2) auf. Damit wird, der jeweiligen Ausführungsart der Brüh- oder Zubereitungskammer (1) entsprechend, entweder mittels der im ersten Kammerteil (2) und zweiten Kammerteil (3) angeordneten elektrischen Kontakte (13, 19) oder mittels der nur im ersten Kammerteil (2) angeordneten Kontakte (19, 22) oder der nur im zweiten Kammerteil (3) angeordneten Kontakte (13, 16) der Steuerstromkreis (30) für die Steuervorrichtung (34) in der Brüh- oder Zubereitungskammer (1) mittels der elektrisch leitenden, mit einander elektrisch leitenden Zonen der Portionskapsel (27, 29) geschlossen. Anschließend wird durch Schließen des Startkontaktes (33) für die Getränkezubereitung durch den Gerätebediener der Steuerstromkreis (30) für die Steuervorrichtung (34) geschlossen, und die Steuervorrichtung (34) gibt über die Startsignalleitung (31) das Startsignal zum Schließen des Startkontaktes (38), der den Stromkreis (36) für die Extraktionsflüssigkeitspumpe (37) schließt, und der Getränkezubereitungsvorgang startet. Die Extraktionsflüssigkeit wird durch die von den Aufstechmitteln (11, 12, 13, 16) in die Portionskapsel (27, 29) gestochenen Öffnungen über den Extraktionsflüssigkeitszulauf (41) und die Extraktionsflüssigkeitsleitung (42) unter Druck in die Portionskapsel (27, 29) gepumpt. Bei einer mit einer Pyramidenplatte (4) ausgestatteten Brüh -oder Zubereitungskammer (1) wird durch den Pumpendruck das Deckelverschlusselement (28) der Portionskapsel (27, 29) so stark auf die Spitzen (5) der Pyramidenplatte (4) gedrückt, dass diese das Deckelverschlusselement (28) durchstechen, und das Getränk fließt durch die Ablaufbohrungen (6) der Pyramidenplatte (4) in einen Sammelraum (7) und aus diesem über die Getränkeablaufleitung (8) in ein Auffanggefäß (43) ab. Bei einer Brüh oder Zubereitungskammer (1) deren erstes Kammerteil (2) mit einem Portionskapsel-Öffnungsdorn (25) ausgestattet ist, durchsticht dieser das Deckelverschlusselement (28) der Portionskapsel (27, 29) und das Getränk fließt durch die Getränkeablaufnut (26) des Öffnungsdorns (25) in ein Auffanggefäß (43).

Das in der Extraktionsflüssigkeitsleitung (42) liegende Flowmeter (40) misst die Menge der durchfließenden Extraktionsflüssigkeit und gibt bei Erreichen der vorprogrammierten Menge ein Stoppsignal über die Stoppsignalleitung (32) an die Prüf- und Steuervorrichtung (34) und diese öffnet den Stromkreis (36) für die Extraktionsflüssigkeitspumpe (37). Der Steuerstromkreis für die Prüf- und Steuervorrichtung kann sowohl ein Wechselstromkreis als auch ein Gleichstromkreis sein.

Die beschriebene elektrische Schaltungsanordnung für die Auswertung des mittels der elektrischen Kontakte des ersten und zweiten Kammerteils und der leitenden Zonen der Portionskapsel gewonnenen Steuersignals stellt nur eine von verschiedenen möglichen Auswertungsschaltungen dar.

### Bezugszeichenliste

- 1:: Brüh- oder Zubereitungskammer
- 2:: erstes Kammerteil
- 3:: zweites Kammerteil
- 4:: Pyramidenplatte
- 5:: Pyramidenspitzen
- 6:: Getränkeablaufbohrungen
- 7:: Getränkesammelraum
- 8:: Getränkeablaufleitung
- 9:: Extraktionsflüssigkeitszulauf
- 10:: Extraktionsflüssigkeitsverteilerraum
- 11:: Aufstechmittel
- 12:: Aufstechmittel
- 13:: Aufstechmittel als elektrischer Kontakt
- 14:: Aufstechmittelisolierung
- 15:: elektrische Kontaktleitung
- 16:: Aufstechmittel als elektrischer Kontakt
- 17:: Kontaktisolierung
- 18:: elektrische Kontaktleitung
- 19:: elektrischer Kontakt , erster Kammerteil
- 20:: Kontaktisolierung
- 21:: elektrische Kontaktleitung
- 22:: elektrischer Kontakt, erster Kammerteil
- 23:: Kontaktisolierung
- 24:: elektrische Kontaktleitung
- 25:: Öffnungsdorn
- 26:: Getränkeablaufnut
- 27:: Portionskapsel, elektrisch leitend
- 27a: Portionskapsel, elektrisch leitende Zone
- 28:: Deckelverschlusselement, elektrisch leitend
- 29:: Portionskapsel, elektrisch nicht leitend
- 30:: Steuerstromkreis für Steuervorrichtung
- 31:: Startsignalleitung
- 32:: Stoppsignalleitung
- 33:: Startkontakt
- 34:: Prüf - und Steuervorrichtung
- 35:: Spannungsquelle für die Steuervorrichtung
- 36:: Extraktionsflüssigkeitspumpenstromkreis
- 37:: Extraktionsflüssigkeitspumpe
- 38:: Startkontakt für die Extraktionsflüssigkeitspumpe
- 39:: Spannungsquelle für die Extraktionsflüssigkeitspumpe
- 40:: Flowmeter
- 41:: Extraktionsflüssigkeitszulauf
- 42:: Extraktionsflüssigkeitsleitung
- 43:: Auffanggefäß

## Patentansprüche

1. Brüh- oder Zubereitungskammer (1) eines Getränkezubereitungsgerätes, die zur Aufnahme und Extraktion einer mit pulverförmigen oder flüssigen Getränkebasisstoffen gefüllten Portionskapsel (27, 29), die vollständig oder teilweise aus elektrisch leitendem Material besteht, geeignet ist, wobei die Brüh- oder Zubereitungskammer (1) aus einem ortsfesten ersten Kammerteil (2), das mit Öffnungsmitteln (5) zum Öffnen der Portionskapsel (27, 29) zum Getränkeauslauf versehen und mit einer Struktur (6, 7, 8) zum Abfließen des Getränkes fluidleitend verbunden ist, und einem zweiten, gegenüber dem ersten Kammerteil (2) horizontal oder vertikal beweglichen Kammerteil (3), das zur Versorgung der Portionskapsel (27, 29) mit der Extraktionsflüssigkeit mit einer die Extraktionsflüssigkeit zuführenden Extraktionsflüssigkeits-Pumpe (37) fluidleitend verbunden und mit Aufstechmitteln (11 , 12) zum Öffnen der Portionskapsel (27, 29) und zum Einleiten der Extraktionsflüssigkeit in die Portionskapsel (27, 29) versehen ist, besteht, wobei die Brüh- oder Zubereitungskammer (1) zur Aufnahme einer Portionskapsel (27, 29) geöffnet und zur Extraktion der Portionskapsel (27, 29) geschlossen ist,
**dadurch gekennzeichnet,**
**dass** im ersten Kammerteil (2) und im zweiten Kammerteil (3) elektrisch leitende, voneinander elektrisch isolierte Kontakte (13, 9), die die Enden eines unterbrochenen Steuerstromkreises (30) einer Prüf- und Steuervorrichtung (34) sind, angeordnet sind, so dass bei in der geschlossenen Brüh- oder Zubereitungskammer (1) liegender, vollständig elektrisch leitender Portionskapsel (27) der elektrische Kontakt (19) des ersten Kammerteils (2) und der elektrische Kontakt (13) des zweiten Kammerteils (3) in elektrisch leitendem Kontakt mit der Portionskapsel (27) stehen und der Steuerstromkreis (30) der Prüf- und Steuervorrichtung (34) geschlossen ist.

2. Brüh- oder Zubereitungskammer nach Anspruch 1,
**dadurch gekennzeichnet,**
**dass** das im ersten Kammerteil (2) angeordnete Öffnungsmittel (5) als elektrischer Kontakt ausgebildet ist.

3. Brüh- oder Zubereitungskammer nach Anspruch 1,
**dadurch gekennzeichnet,**
**dass** die im zweiten Kammerteil (3) angeordneten Aufstechmittel (13, 6) als elektrische Kontakte ausgebildet sind.

4. Brüh- oder Zubereitungskammer nach Anspruch 1,
**dadurch gekennzeichnet,**
**dass** die Aufstechmittel (11, 12, 13, 16) im ersten Kammerteil (2) und das Öffnungsmittel (25) im zweiten Kammerteil (3) angeordnet sind.

## Claims

1. A brewing or preparation chamber (1) of a beverage preparation apparatus which is suited for receiving and extracting a single-portion capsule (27, 29) filled with powdered or liquid basic beverage substances, the capsule consisting completely or partly of electrically conducting material, wherein the brewing or preparation chamber (1) consists of a stationary first chamber compartment (2) provided with opening means (5) for opening the single-portion capsule (27, 29) for draining beverage and fluid-communicated with a structure (6, 7, 8) for discharging the beverage, and of a second chamber compartment (3) horizontally or vertically movable vis-à-vis the first chamber compartment (2) which is in fluid communication with an extraction liquid pump (37) for supplying the single-portion capsule (27, 29) with the extraction liquid and is provided with puncturing means (11, 12) for opening the single-portion capsule (27, 29) and for introducing the extraction liquid into the single-portion capsule (27, 29), the brewing or preparation chamber (1) being opened for receiving a single-portion capsule (27, 29) and being closed for extraction of the single-portion capsule (27, 29),
**characterized in that**
in the first chamber compartment (2) and in the second chamber compartment (3) electrically conducting contacts (13, 19) electrically insulated against each other which constitute the ends of a disconnected control circuit (30) of a testing and control device (34) are arranged so that, when the completely electrically conducting single-portion capsule (27) located in the closed brewing or preparation chamber (1), the electric contact (19) of the first chamber compartment (2) and the electric contact (13) of the second chamber compartment (3) are in electrically conducting contact with the single-portion capsule (27) and the control circuit (30) of the testing and control device (34) is closed.

2. The brewing or preparation chamber according to claim 1,
**characterized in that**
the opening means (5) arranged in the first chamber compartment (2) is in the form of an electric contact.

3. The brewing or preparation chamber according to claim 1,
**characterized in that**
the puncturing means (13, 6) arranged in the second chamber compartment (3) are in the form of electric contacts.

4. The brewing and preparation chamber according to claim 1,
**characterized in that**
the puncturing means (11, 12, 13, 16) are arranged in the first chamber compartment (2) and the opening means (25) is arranged in the second chamber compartment (3).

## Revendications

1. Chambre d'infusion ou de préparation (1) d'un appareil de préparation de boisson, laquelle est conçue pour un accueil et une extraction d'une capsule portionnée (27, 29) remplie de substances de base de boisson sous forme poudreuse ou liquide, laquelle est composée entièrement ou partiellement d'un matériau électriquement conducteur, la chambre d'infusion ou de préparation (1) étant composée d'une première partie de chambre (2) fixe, qui est munie de moyens d'ouverture (5) pour ouvrir la capsule portionnée (27, 29) pour un déversement de la boisson et reliée en liaison fluidique à une structure (6, 7, 8) pour un écoulement de la boisson, et d'une deuxième partie de chambre (3), qui est mobile horizontalement ou verticalement par rapport à la première partie de chambre (2) et qui est reliée en liaison fluidique à une pompe à liquide d'extraction (37), qui achemine le liquide d'extraction, pour une alimentation de la capsule portionnée (27, 29) avec le liquide d'extraction et munie de moyens de perforation (11, 12) pour une ouverture de la capsule portionnée (27, 29) et pour une introduction du liquide d'extraction dans la capsule portionnée (27, 29), la chambre d'infusion ou de préparation (1) étant ouverte pour un accueil d'une capsule portionnée (27, 29) et fermée pour une extraction de la capsule portionnée (27, 29),
**caractérisée en ce que**
des contacts (13, 19) électriquement conducteurs et isolés électriquement les uns des autres, lesquels sont les extrémités d'un circuit de courant de commande (30) interrompu d'un dispositif de contrôle et de commande (34), sont disposés dans la première partie de chambre (2) et dans la deuxième partie de chambre (3), de sorte que, dans le cas d'une capsule portionnée (27) entièrement électriquement conductrice se trouvant dans la chambre d'infusion ou de préparation (1) fermée, le contact électrique (19) de la première partie de chambre (2) et le contact électrique (13) de la deuxième partie de chambre (3) sont en contact électriquement conducteur avec la capsule portionnée (27) et le circuit de courant de commande (30) du dispositif de contrôle et de commande (34) est fermé.

2. Chambre d'infusion ou de préparation selon la revendication 1,
**caractérisée en ce que**
le moyen d'ouverture (5) disposé dans la première partie de chambre (2) est réalisée en tant que contact électrique.

3. Chambre d'infusion ou de préparation selon la revendication 1,
**caractérisée en ce que**
les moyens de perforation (13, 6) disposés dans la deuxième partie de chambre (3) sont réalisées en tant que contacts électriques.

4. Chambre d'infusion ou de préparation selon la revendication 1,
**caractérisée en ce que**
les moyens de perforation (11, 12, 13, 16) sont disposés dans la première partie de chambre (2) et le moyen d'ouverture (25) dans la deuxième partie de chambre (3).
